# EUROPEAN PATENT APPLICATION

(11) **EP 4 411 412 A1**
(43) Date of publication of application: **07.08.2024**
(21) Application number: 22875948.6
(22) Date of filing: 21.09.2022
(51) Int. Cl.: G01S 7/40, B60R 11/02, B60S 1/62, G01S 13/86

(54) **VEHICLE SENSOR DEVICE**

(30) Priority: 29.09.2021 JP 2021160031
(71) Applicant: KOITO MANUFACTURING CO., LTD., Minato-ku Tokyo 108-8711 (JP)
(72) Inventor: WATANO Yuichi, Shizuoka-shi, Shizuoka 424-8764 (JP); KUBOYAMA Osamu, Shizuoka-shi, Shizuoka 424-8764 (JP); KATSURADA Yoshihiro, Shizuoka-shi, Shizuoka 424-8764 (JP)
(74) Representative: Hoffmann Eitle
(86) International application number: PCT/JP2022/035064
(87) International publication number: WO 2023/054078

(57) **Abstract**

A vehicle sensor device (1) includes an outer cover (12), a sensor unit (20) that is disposed deeper inside a vehicle (VE) than the outer cover (12), detects an object using electromagnetic waves transmitted and received through the outer cover (12), and outputs a detection signal related to the detection of the object, and a control unit (CO). The control unit (CO) makes a determination of whether an object detected by sensor unit (20) is included in an image signal from a camera (51) that is mounted on the vehicle (VE) and photographs a detection range of the sensor unit (20) .

## Description

### Technical Field

The present invention relates to a vehicle sensor device.

### Background Art

A vehicle sensor device that detects an object outside a vehicle using electromagnetic waves is known. For example, Patent Literature 1 below discloses such a vehicle sensor device.

The vehicle sensor device in Patent Literature 1 below includes a lamp unit that emits light toward the front of a vehicle, a radar device that detects an object located in front of the vehicle using electromagnetic waves, a reflected wave intensity acquisition unit that acquires the intensity of reflected waves of the electromagnetic waves, a control unit, and an outer cover. When the radar device detects the object, if the outer cover has deposits such as ice and snow, the amount of reflected waves of the electromagnetic waves reflected by the outer cover tends to increase due to the influence of the deposits, as compared with the case where the outer cover has no deposits. To address this issue, in the vehicle sensor device, the control unit determines the adherence of deposits to the outer cover based on the intensity of the reflected waves acquired by the reflected wave intensity acquisition unit. When the deposits adhere, the control unit controls the lamp unit to be ON, and heats the outer cover using the radiation heat of the lamp unit to melt the deposits.

[Patent Literature 1] JP 2020-50271 A

### Summary of Invention

When the above-described radar device detects the object, the amount of reflected waves of the electromagnetic waves reflected by the object tends to increase as the object is closer to the vehicle even if the outer cover has no deposits. As the amount of reflected waves increases, the intensity of the reflected waves received by the reflected wave intensity acquisition unit tends to increase. Thus, if the intensity of the reflected waves of the electromagnetic waves reflected from the object when the outer cover has no deposits is close to the intensity of the reflected waves of the electromagnetic waves reflected from deposits, it is difficult to detect an abnormality of the vehicle such as deposits on the outer cover. Therefore, there is a demand to easily detect an abnormality of the vehicle.

An object of the present invention is to provide a vehicle sensor device capable of easily detecting an abnormality of the vehicle.

To achieve the above object, the vehicle sensor device according to the present invention includes: an outer cover; a sensor unit that is disposed deeper inside the vehicle than the outer cover, detects an object using electromagnetic waves transmitted and received through the outer cover, and outputs a detection signal related to the detection of the object; and a control unit, in which the control unit makes a determination of whether or not the object detected by the sensor unit is included in an image signal from a camera that is mounted on the vehicle and photographs a detection range of the sensor unit.

When the outer cover has deposits, the sensor unit tends to detect the deposits. Considering this, in the above configuration, the control unit makes a determination of whether or not the object detected by the sensor unit is included in the image signal. Since the camera does not capture deposits, if the object detected by the sensor unit is not included in the image signal, there is a high possibility that the deposits are on the outer cover, and thus the control unit can detect an abnormality of the vehicle such as the adherence of deposits to the outer cover based on the above-described determination. As described above, the vehicle sensor device can easily detect the abnormality of the vehicle as compared with the case of detecting the abnormality of the vehicle using only the intensity of the reflected waves of the electromagnetic waves from the deposits.

In addition, a heater provided on the outer cover may be further included, and the control unit may drive the heater when the object detected by the sensor unit is not included in the image signal.

When the heater is driven, the outer cover is warmed, and deposits such as water droplets, ice, and snow can be melted by heat and removed from the outer cover. When the deposits are removed, the position of the object can be detected from each of the sensor unit and the camera, and the safety during traveling of a vehicle can be improved by using information on the position detected from each of the sensor unit and the camera.

In addition, a cleaner that injects at least one of liquid and gas from the outside of the vehicle toward the outer cover may be further included, and the control unit may drive the cleaner when the object detected by the sensor unit is not included in the image signal.

When the cleaner is driven, deposits such as dust, water droplets, ice and snow, and mud can be removed from the outer cover by injected liquid or gas. When the deposits are removed, the position of the object can be detected from each of the sensor unit and the camera, and the safety during traveling of a vehicle can be improved by using information on the position detected from each of the sensor unit and the camera.

The vehicle sensor device may further include: a heater provided on the outer cover; and a cleaner that injects at least one of liquid and gas from the outside of the vehicle toward the outer cover, in which, when the object detected by the sensor unit is not included in the image signal from a camera that is mounted on the vehicle and photographs a detection range of the sensor unit, the control unit may drive at least one of the heater and the cleaner, make the determination again after the end of driving of the heater and the cleaner, and output a camera failure signal related to a failure of the camera when it is determined in such a determination that the object detected by the sensor unit is not included in the image signal.

After the deposits are removed, if the object is detected by the sensor unit and the object detected by the sensor unit is not included in the image signal, there is a high possibility that the camera has failed. When there is a high possibility that the camera has failed, for example, when the camera failure signal is input to a monitor visible to a driver, the driver can be notified of information indicating that there is the high possibility that the camera has failed through the monitor.

Alternatively, the vehicle sensor device may further include: a heater provided on the outer cover; and a cleaner that injects at least one of liquid and gas from the outside of the vehicle toward the outer cover, in which, when the object detected by the sensor unit is not included in the image signal from a camera that is mounted on the vehicle and photographs a detection range of the sensor unit, the control unit may drive at least one of the heater and the cleaner, make a determination of whether or not the object included in the image signal is detected by the sensor unit after the end of driving of the heater and the cleaner, and output a sensor failure signal related to a failure of the sensor unit when it is determined in such a determination that the object included in the image signal is not detected by the sensor unit.

After the deposits are removed, if the object is captured by the camera and the object included in the image signal is not detected by the sensor unit, there is a high possibility that the sensor unit has failed. When there is a high possibility that the sensor unit has failed, for example, when the sensor failure signal is input to a monitor visible to the driver, the driver can be notified of information indicating that there is the high possibility that the camera has failed through the monitor.

In addition, the control unit may make the determination by comparing a position of the object detected by the sensor unit with a position of the object included in the image signal.

Alternatively, in the determination, the control unit may make the determination based on whether or not the image signal includes the object that is detected by the sensor unit and reflects the electromagnetic waves as reflected waves with predetermined intensity or higher.

The vehicle sensor device of the present invention may include: an outer cover; a sensor unit that is disposed deeper inside the vehicle than the outer cover, detects an object using electromagnetic waves transmitted and received through the outer cover, and outputs a detection signal related to the detection of the object; a heater provided on the outer cover; a cleaner that injects at least one of liquid and gas from the outside of the vehicle toward the outer cover; and a control unit, in which the control unit may drive at least one of the heater and the cleaner when the object detected by the sensor unit is not included in the image signal from a camera that is mounted on the vehicle and photographs a detection range of the sensor unit.

As described above, when the object detected by the sensor unit is not included in the image signal, there is a high possibility that deposits are on the outer cover. In this case, when the heater is driven, the outer cover is warmed, and the deposits such as water droplets, ice, and snow can be melted by heat and removed from the outer cover. In addition, when the cleaner is driven, the deposits such as dust, water droplets, ice and snow, and mud can be removed from the outer cover by injected liquid or gas. When the deposits are removed, the position of the object can be detected from each of the sensor unit and the camera, and the safety during traveling of a vehicle VE can be improved by using information on the position detected from each of the sensor unit and the camera.

As described above, according to the present invention, it is possible to provide the vehicle sensor device capable of easily detecting an abnormality of the vehicle.

### Brief Description of Drawings

FIG. 1 is a diagram schematically illustrating a vehicle lamp including a vehicle sensor device according to an embodiment of the present invention.
FIG. 2 is a diagram illustrating an example of a control flowchart of a control unit according to the embodiment.
FIG. 3 is a diagram illustrating a control flowchart of a control unit in a removal operation.
FIG. 4 is a timing chart schematically illustrating a second operation.
FIG. 5 is a timing chart schematically illustrating a modification of a third operation.
FIG. 6 is a timing chart schematically illustrating a fifth operation.

### Description of Embodiments

Hereinafter, a preferred embodiment of a vehicle sensor device according to the present invention will be described in detail with reference to the drawings. The embodiment exemplified below are intended to facilitate understanding of the present invention and are not intended to limit the present invention. The present invention can be modified and improved without departing from the gist thereof. In addition, in the present invention, components in the following exemplary embodiments may be appropriately combined. In the drawings referred to below, dimensions of each member may be changed for easy understanding.

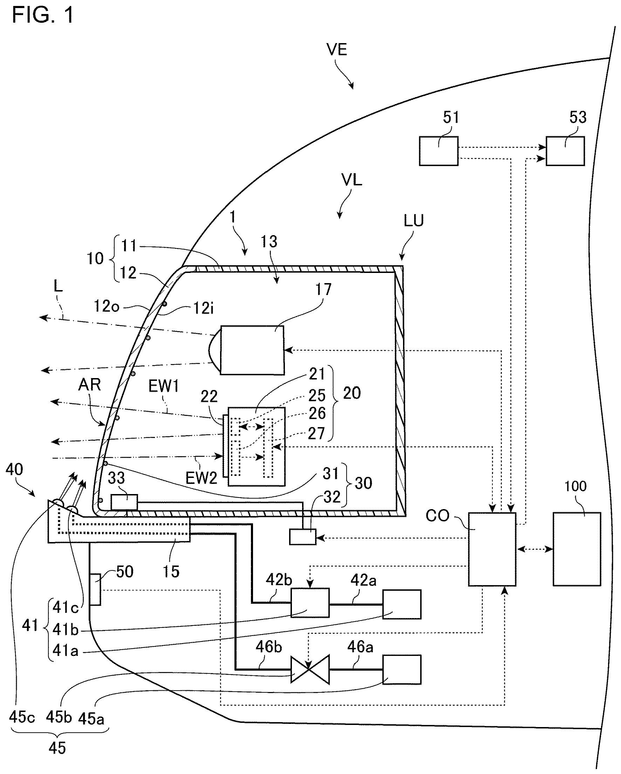

FIG. 1 is a diagram schematically illustrating a vehicle lamp according to an embodiment of the present invention. A vehicle lamp VL of the present embodiment is a head lamp for an automobile. Generally, one head lamp for the automobile is provided in each of the left and right directions at the front portion of the vehicle VE, and the left and right head lamps are configured to be substantially symmetrical in the left-right direction. Therefore, one vehicle lamp VL will be described.

As illustrated in FIG. 1, the vehicle lamp VL mainly includes a housing 10, a light source unit 17, a sensor unit 20, a heater 30, a cleaner 40, and a control unit CO. The housing 10 and the light source unit 17 constitute a lamp unit LU, and the housing 10, the sensor unit 20, the heater 30, the cleaner 40, and the control unit CO constitute a vehicle sensor device 1. In FIG. 1, the housing 10 is illustrated in a vertical cross section.

The housing 10 of the present embodiment mainly includes a housing 11 and an outer cover 12. The housing 11 and the outer cover 12 are made of different types of resins, for example. The outer surface 12o of the outer cover 12 is mostly exposed to the outside of the vehicle VE and is a part of the outer surface of the vehicle VE. The housing 11 is formed in a box shape having an opening on the front side, and the outer cover 12 is fixed to the housing 11 so as to cover the opening. An accommodation space 13 enclosed by the housing 11 and the outer cover 12 is formed in the housing 10, and the light source unit 17 and the sensor unit 20 are arranged in the accommodation space 13. The outer cover 12 is made of a material that transmits light emitted from the light source unit 17 and electromagnetic waves emitted from the sensor unit 20.

The light source unit 17 is configured to emit light L of a predetermined light distribution pattern to the front. In the present embodiment, the light source unit 17 is configured to switch between emission and non-emission of the light L, and switch the light distribution pattern of the emitted light L to either the low beam light distribution pattern or the high beam light distribution pattern according to a control signal from the control unit CO. Examples of such a light source unit 17 include a configuration including a light source unit in which a plurality of light emitting elements are arranged in a matrix, and a lens through which light emitted from the light source unit is transmitted. Examples of the light source unit include a light emitting diode (LED) array. The light L emitted from the light source unit is emitted to the front of the vehicle VE through the lens and the outer cover 12.

The sensor unit 20 is disposed deeper inside the vehicle VE than the outer cover 12. The sensor unit 20 detects an object using electromagnetic waves transmitted and received through the outer cover 12, and outputs a detection signal related to the detection of the object. The sensor unit 20 mainly includes a housing 21 having an accommodation space, a transmission unit 25, a reception unit 26, and a detection unit 27. The transmission unit 25, the reception unit 26, and the detection unit 27 are arranged in the accommodation space of the housing 21. In the present embodiment, the sensor unit 20 detects the front of the vehicle VE. In the present embodiment, radio waves are used as the electromagnetic waves, and the radio waves are millimeter waves.

The transmission unit 25 emits radio wave EW1. The frequency of the radio wave EW1 is, for example, between 30 GHz to 300 GHz. The radio wave EW1 propagates from the electromagnetic wave transmission portion 22 facing the outer cover 12 in the housing 21 toward the outer cover 12, is transmitted through the outer cover 12, and is emitted to the front of the vehicle VE. In the present embodiment, the transmission unit 25 is configured to emit radio waves spreading at a predetermined angle in the left-right direction of the vehicle VE from the electromagnetic wave transmission portion 22 and to be capable of changing the frequency of the radio waves. The transmission unit 25 includes an antenna (not illustrated). The transmission unit 25 emits radio waves whose intensity is substantially constant and whose frequency repeatedly increases and decreases at a predetermined cycle according to the control signal transmitted from the control unit CO through the detection unit 27. When emitting the radio wave EW1, the transmission unit 25 outputs a signal related to the radio wave EW1 to the detection unit 27. This signal may include information on the intensity of the radio wave EW1 and information on the phase of the radio wave EW1.

The reception unit 26 includes a plurality of antennas (not illustrated). The plurality of antennas are arranged in the left-right direction of the vehicle VE, for example. A part of radio wave EW2 that is transmitted through the outer cover 12 from the outside of the vehicle VE and incident on the accommodation space 13 is received by the antennas of the reception unit 26 through the electromagnetic wave transmission portion 22. When each antenna receives the radio wave EW2 incident on the electromagnetic wave transmission portion 22, the reception unit 26 outputs a signal related to the radio wave EW2 to the detection unit 27. This signal may include information on the intensity of the radio wave EW2 and information on the phase of the radio wave EW2.

When an object is located in front of vehicle VE, a part of the radio wave EW1 transmitted from transmission unit 25 is reflected by the object. A part of the radio wave reflected by the object is transmitted through the outer cover 12, enters the accommodation space 13, and is received by the reception unit 26 as the radio wave EW2. The signal related to the radio wave EW1 input from the transmission unit 25 and the signal related to the radio wave EW2 input from the reception unit 26 are input to the detection unit 27. The detection unit 27 detects the object located in front of the vehicle VE, calculates the position of the object with respect to the vehicle VE, calculates the orientation of the object with respect to the vehicle VE, and calculates the distance between the object and the vehicle VE based on the signals from the transmission unit 25 and the reception unit 26, by, for example, a frequency modulated continuous wave (FMCW) method. Then, the detection unit 27 outputs the detection signal related to the detection of the object to the control unit CO. The detection signal includes, for example, information on the presence or absence of the object, the position of the object with respect to the vehicle VE, the orientation of the object with respect to the vehicle VE, and the distance between the object and the vehicle VE. The detection signal also includes information on the intensity of the received radio wave EW2. Note that, when deposits are on the outer cover 12, noise due to the influence of the deposits is added to the signal from the reception unit 26. For this reason, the detection unit 27 detects the presence of the deposits based on the signal to which noise is added. The configuration of such a detection unit include a configuration similar to that of the control unit CO.

Note that the sensor unit 20 only needs to transmit and receive electromagnetic waves through the outer cover 12 and output the detection signal, and the configuration of the sensor unit 20 is not particularly limited. For example, the transmission unit 25 may be configured to repeatedly emit pulsed radio waves. In this case, the detection unit 27 detects the object and calculates the distance between the object and the vehicle VE by, for example, a time of flight (ToF) method. In addition, the sensor unit 20 may be a light detection and ranging (LiDAR) that emits laser light as electromagnetic waves and receives the laser light. Furthermore, the electromagnetic waves transmitted and received by the sensor unit 20 may be infrared rays or ultraviolet rays. That is, the signals from the transmission unit 25 and the reception unit 26 include not only the signals related to the radio waves EW1 and EW2 as described above but also a signal related to the electromagnetic waves transmitted and received by the sensor unit 20 through the outer cover 12.

The heater 30 is provided on the outer cover 12. The heater 30 heats a transmission region AR of the outer cover 12 through which the electromagnetic waves emitted from the sensor unit 20 is transmitted. The transmission region AR is a region on the outer surface 12o of the outer cover 12 through which the radio waves EW1 and EW2 are transmitted. The heater 30 mainly includes a heating wire 31 and a power supply circuit 32. The heating wire 31 of the present embodiment is provided in an inner surface 12i of the outer cover 12, and is connected to the power supply circuit 32 via a connector 33. The heating wire 31 is not particularly limited as long as it generates heat when a current flows, and may be formed of a paste of a conductor or may be formed of a metal wire or the like. The power supply circuit 32 applies a voltage to the heating wire 31 according to the control signal from the control unit CO. When the voltage is applied and a current flows through the heating wire 31, the heating wire 31 generates heat to heat the transmission region AR. In the present embodiment, the transmission region AR overlaps a part of the heating wire 31 in the propagation direction of the radio wave EW1. In addition, the calorific value of the heating wire 31 is set as a value at which deformation, burning, or the like of the outer cover 12 due to heat does not occur. In the present description, the transmission region AR is described as a region through which the radio waves EW1 and EW2 are transmitted, but as described above, the sensor unit 20 also includes the mode of transmitting and receiving a laser light as electromagnetic waves. For this reason, the transmission region AR is a region through which the electromagnetic waves emitted from the sensor unit 20 are transmitted.

Note that the heating wire 31 only needs to be capable of heating the transmission region AR, and may heat a region other than the transmission region AR of the outer cover 12. In this case, heat of the heating wire 31 is transferred to the transmission region AR through the region other than transmission region AR. In addition, for example, the transmission region AR and the heating wire 31 may not overlap each other in the propagation direction of the radio wave EW1, and the heating wire 31 may be attached to the outer surface 12o or the inside of the outer cover 12. In this manner, the heater 30 only needs to be capable of heating the outer cover 12.

The cleaner 40 is configured to inject at least one of liquid and gas from the outside of the vehicle VE toward the transmission region AR on the outer surface 12o of the outer cover 12. The vehicle sensor device 1 can remove deposits adhering to the transmission region AR using the liquid or gas injected from the cleaner 40. In the present embodiment, the cleaner 40 is configured to be capable of injecting liquid and gas individually toward the transmission region AR, and includes a liquid unit 41 that injects liquid toward the transmission region AR and a gas unit 45 that injects gas toward the transmission region AR. In the present embodiment, an example in which the liquid unit 41 injects liquid toward the transmission region AR and the gas unit 45 injects gas toward the transmission region AR will be described, but the liquid and the gas may flow onto the transmission region AR through the outer surface 12o of the outer cover 12. Therefore, the cleaner 40 only needs to inject at least one of liquid and gas from the outside of the vehicle VE toward the outer cover 12.

A support base 15 extending in the front-rear direction is attached to a front end portion below the housing 11. The front end of the support base 15 is located in front of the outer cover 12. The liquid unit 41 of the present embodiment mainly includes a tank 41a that stores liquid, a pump 41b, and an injection nozzle 41c. A pipe 42a connected to the tank 41a and a pipe 42b connected to the injection nozzle 41c are connected to the pump 41b. The pump 41b pumps liquid in the tank 41a to the injection nozzle 41c. The pump 41b adjusts the amount of liquid to be pumped to the injection nozzle 41c or stops the pumping of the liquid according to the control signal from the control unit CO. The injection nozzle 41c is attached to a portion of the support base 15 located in front of the outer cover 12 such that the liquid pumped from the tank 41a is injected toward the transmission region AR. In addition, the injection nozzle 41c is located below the transmission region AR. For this reason, when the pump 41b pumps the liquid to the injection nozzle 41c, the liquid is injected toward the transmission region AR from the lower side. Examples of the liquid stored in the tank 41a include water and a window washer liquid. When the liquid is the window washer liquid, the tank 41a may be a window washer tank provided in the vehicle VE. Note that the liquid unit 41 only needs to be capable of injecting liquid toward the outer cover 12 from a position farther to the outside of the vehicle VE than the outer cover 12, and the configuration of the liquid unit 41 is not particularly limited.

The gas unit 45 of the present embodiment mainly includes a tank 45a that stores gas at a pressure higher than atmospheric pressure, a valve 45b, and an injection nozzle 45c. A pipe 46a connected to the tank 45a and a pipe 46b connected to the injection nozzle 45c are connected to the valve 45b. When the valve 45b is opened, gas in the tank 41a is pumped to the injection nozzle 45c. The valve 45b adjusts the opening and closing of the valve 45b according to the control signal from the control unit CO. The injection nozzle 45c is attached to a portion of the support base 15 located in front of the outer cover 12 such that the gas pumped from the tank 45a is injected toward the transmission region AR. In addition, the injection nozzle 45c is located below the transmission region AR. For this reason, when the valve 45b is opened, the gas is injected from the lower side toward the transmission region AR. Examples of the gas stored in the tank 41a include air. When this gas is air, a compressor may be connected to the tank 41a, and the pressure of the air in the tank 41a may be maintained in a predetermined range by the compressor. Note that the gas unit 45 only needs to be capable of injecting gas toward the outer cover 12 from a position farther to the outside of the vehicle VE than the outer cover 12, and the configuration of the gas unit 45 is not particularly limited.

The control unit CO includes, for example, an integrated circuit such as a microcontroller, an integrated circuit (IC), a large-scale integrated circuit (LSI), or an application specific integrated circuit (ASIC), or a numerical control (NC) device. In addition, when the NC device is used, the control unit CO may use a machine learning device or may not use the machine learning device. The control unit CO controls several configurations of the vehicle lamp VL. An electronic control unit (ECU) 100 of the vehicle VE is connected to the control unit CO. The control unit CO may input the detection signal from the sensor unit 20 to the ECU 100. The ECU 100 assists the traveling of the vehicle VE based on the detection signal.

In addition, a temperature sensor 50 that measures the temperature outside the vehicle VE is connected to the control unit CO, and the temperature sensor 50 outputs a temperature signal indicating the measured temperature to the control unit CO. Examples of the temperature sensor 50 include a sensor using a thermistor. The temperature sensor 50 of the present embodiment is attached to, for example, a front bumper of the vehicle VE. Note that the configuration and attachment position of the temperature sensor 50 are not particularly limited. Therefore, the signal indicating the temperature may be input from the ECU 100 to the control unit CO.

In addition, a camera 51 is connected to the control unit CO. The camera 51 is attached to an upper portion of the vehicle outside the housing 10, for example. Examples of the camera 51 include a stereo camera. Note that the attachment position and configuration of the camera 51 are not particularly limited. The photographing range of the camera 51 is included in the detection range of the sensor unit 20, but may include the detection range of the sensor unit 20. The detection range of the sensor unit 20 is a range in which the radio wave EW1 from the transmission unit 25 spreads. Since the sensor unit 20 detects the front of the vehicle VE as described above, the camera 51 photographs the front of the vehicle VE. The image of the camera 51 is converted into an image signal and input to the control unit CO. When an object such as a preceding vehicle or a person is located in front of the vehicle VE, the object is captured in the image and the object is included in the image signal. In addition, when the object is captured in the image, the image signal includes information related to the position of the object with respect to the vehicle VE and the orientation of the object with respect to the vehicle VE. From the image signal, the control unit CO detects the object, calculates the position of the object with respect to the vehicle VE, calculates the orientation of the object with respect to the vehicle VE, and measures the distance between the object and the vehicle.

A monitor 53 is connected to the camera 51. The monitor 53 displays an image captured by the camera 51. The monitor 53 is installed at a position visible to the driver.

Next, the operation of the control unit CO will be described.

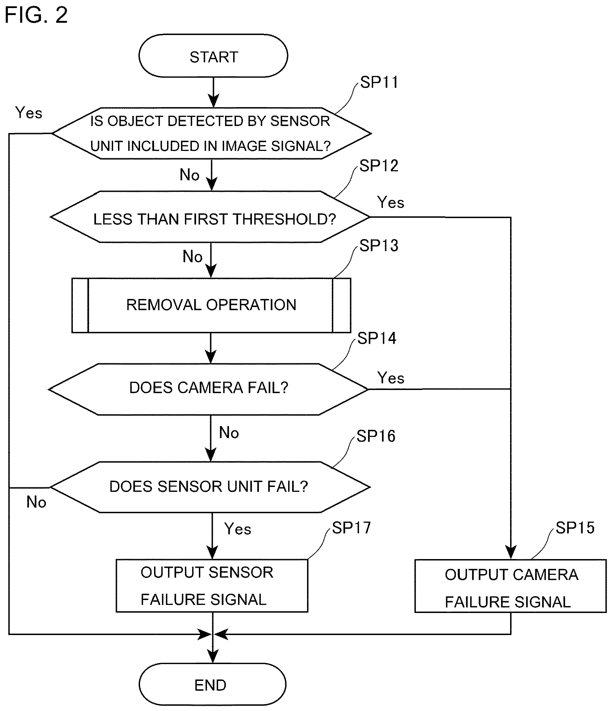

FIG. 2 is a diagram illustrating an example of a control flowchart of the control unit CO according to the embodiment. As illustrated in FIG. 2, the control flow of the present embodiment includes steps SP11 to SP17.

In the starting state illustrated in FIG. 2, it is assumed that the object is located in front of the vehicle VE, the camera 51 photographs the front of the vehicle VE, the sensor unit 20 detects the object by transmitting and receiving electromagnetic waves, and the image signal from the camera 51 and the detection signal from the sensor unit 20 are input to the control unit CO. In each step, it is assumed that the image signal and the detection signal are input to the control unit CO.

### (Step SP11)

This step is a step in which the control unit CO changes the next step through branching depending on whether or not the object detected by the sensor unit 20 is included in the image signal of the camera 51. Therefore, in this step, the control unit CO makes a determination of whether or not the object detected by the sensor unit 20 is included in the image signal. Specifically, as will be described later, when the object is included in the image signal, there is a low possibility that the sensor unit 20 and the camera 51 have failed, and thus the control unit CO ends the control flow. In addition, when the object is not included in the image signal, as will be described later, the control unit CO detects an abnormality of the vehicle VE such as the adherence of deposits to the outer cover 12, and proceeds to step SP12 in the control flow. In this manner, the control unit CO detects whether or not the vehicle VE has an abnormality depending on whether or not the object detected by the sensor unit 20 is included in the image signal of the camera 51.

In this step, when the outer cover 12 has no deposits, the sensor unit 20 and the camera 51 photograph the object. Therefore, the object detected by the sensor unit 20 is photographed by the camera 51 and included in the image signal of the camera 51. When the object detected by the sensor unit 20 is included in the image signal as described above, there is a low possibility that the sensor unit 20 and the camera 51 have failed, and thus the control unit CO ends the control flow.

In this step, contrary to the above, when the outer cover 12 has deposits, the sensor unit 20 tends to detect the deposits. Therefore, there is a high possibility that the deposits detected by the sensor unit 20 are not photographed by the camera 51 and are not included in the image signal of the camera 51. Alternatively, when the outer cover 12 has no deposits and there is a high possibility that the camera 51 has failed, the object detected by the sensor unit 20 may not be photographed by the camera 51 and not included in the image signal of the camera 51. Therefore, in this step, when the object detected by the sensor unit 20 is not included in the image signal, the control unit CO detects an abnormality of the vehicle VE such as the adherence of deposits to the outer cover 12. Then, the control unit CO proceeds to step SP12 in the control flow.

### (Step SP12)

In this step, the control unit CO changes the next step, as will be described later, through branching depending on whether or not the intensity of the radio wave EW2 indicated by the signal input from the reception unit 26 is less than a first threshold. As described above, the radio wave EW1 emitted from the sensor unit 20 propagates toward the transmission region AR. A part of the radio wave EW1 transmits the transmission region AR and irradiates the front of the vehicle VE. Another part of the radio wave EW1 is reflected in the transmission region AR and received by the sensor unit 20 as the radio wave EW2. In addition, when there are deposits in the transmission region AR, yet another part of the radio wave EW1 is reflected by the deposits and received by the sensor unit 20 as the radio wave EW2. For this reason, when there are deposits in the transmission region AR, the intensity of the radio wave EW2 received by the sensor unit 20 tends to be higher than that when there are no deposits in the transmission region AR. In addition, when there are deposits in the transmission region AR, the intensity of the radio wave EW2 received by the sensor unit 20 tends to change depending on the deposits. Examples of the deposits include dust, water droplets, ice and snow, and mud. In general, the intensity of the radio wave EW2 received by the sensor unit 20 tends to be higher in the order of when dust or water droplets adhere to the transmission region AR, when ice and snow adhere to the transmission region AR, and when mud adheres to the transmission region AR. In the present embodiment, the first threshold is set to a value lower than the intensity of the radio wave EW2 received by the sensor unit 20 when a predetermined amount of dust or water droplets adheres to the transmission region AR.

When the intensity of the radio wave EW2 indicated by the detection signal is not less than the first threshold, it means that there are deposits in the transmission region AR, and the deposits need to be removed. Thus, the control unit CO proceeds to step SP13 of removing the deposits in the control flow. In addition, when the intensity is less than the first threshold, there is a high possibility that there are no deposits in the transmission region AR and the camera 51 has failed. Thus, the control unit CO proceeds to step SP15 of reporting the failure of the camera 51 in the control flow.

### (Step SP13)

In this step, as described above, since the intensity of the radio wave EW2 is equal to or greater than the first threshold, there are deposits in the transmission region AR. Therefore, the control unit CO controls the heater 30 and the cleaner 40 to perform a removal operation of removing the deposits in the transmission region AR. The control of the heater 30 and the cleaner 40 in the removal operation will be described later. When the removal operation ends, the control unit CO proceeds to step SP14 in the control flow.

### (Step SP14)

In this step, since the deposits have already been removed, the sensor unit 20 detects the object when the sensor unit 20 works normally. For this reason, the control unit CO makes a determination of whether or not there is a high possibility that the camera 51 has failed when the sensor unit 20 detects the object. Specifically, the control unit CO makes the determination of whether or not the object detected by the sensor unit 20 is included in the image signal. More specifically, as will be described later, when the object detected by the sensor unit 20 is not included in the image signal, there is a high possibility that the camera 51 has failed, and thus the control unit CO proceeds to step SP15 in the control flow. In addition, as will be described later, the control unit CO proceeds to step SP16 in the control flow when the object detected by the sensor unit 20 is included in the image signal or when the object is not detected by the sensor unit 20. Thus, this step is a step in which the control unit CO changes the next step through branching depending on whether or not the object included in the image signal is detected by the sensor unit 20.

In this step, if the object detected by the sensor unit 20 is not included in the image signal, there is a high possibility that the camera 51 has failed. Therefore, in the control flow, the control unit CO proceeds to step SP15 of reporting that there is a high possibility that the camera 51 has failed. In addition, in this step, when the object detected by the sensor unit 20 is included in the image signal, the control unit CO proceeds to step SP16 in the control flow. Meanwhile, in this step, if the sensor unit 20 has failed while the camera 51 works normally, the control unit CO cannot make the determination of whether or not the object detected by the sensor unit 20 is included in the image signal because the object is not detected by the sensor unit 20. In this case, the control unit CO proceeds to step SP16 in the control flow.

### (Step SP15)

In this step, the control unit CO outputs the camera failure signal related to the failure of the camera 51 to the monitor 53. When the camera failure signal is input to the monitor 53, the driver is notified of information indicating that there is a high possibility that the camera 51 has failed. When outputting the camera failure signal to the monitor 53, the control unit CO ends the control flow.

### (Step SP16)

In this step, the control unit CO makes a determination of whether or not there is a high possibility that the sensor unit 20 has failed when the camera 51 works normally and detects the object. Specifically, the control unit CO makes the determination of whether or not the object included in the image signal is detected by the sensor unit 20. More specifically, as will be described later, when the object included in the image signal is detected by the sensor unit 20, there is a low possibility that the sensor unit 20 and the camera 51 have failed, and thus the control unit CO ends the control flow. In addition, when the object included in the image signal is not detected by the sensor unit 20, there is a high possibility that the sensor unit 20 has failed, and thus the control unit CO proceeds to step SP17 of reporting that there is the high possibility that the sensor unit 20 has failed. Thus, this step is a step in which the control unit CO changes the next step through branching depending on whether or not the object included in the image signal is detected by the sensor unit 20.

In this step, since the deposits have already been removed, the sensor unit 20 and the camera 51 photograph the object. Therefore, the object photographed by the camera 51 is included in the image signal of the camera 51 and detected by the sensor unit 20. When the object included in the image signal is detected by the sensor unit 20, there is a low possibility that the sensor unit 20 and the camera 51 have failed, and thus the control unit CO ends the control flow.

Contrary to the above, when the object included in the image signal is not detected by the sensor unit 20, there is a high possibility that the sensor unit 20 has failed because the deposits have already been removed. Thus, in the control flow, the control unit CO proceed to step SP17 of reporting that there is a high possibility that the sensor unit 20 has failed.

### (Step SP17)

In this step, the control unit CO outputs the sensor failure signal related to the failure of the sensor unit 20. When the sensor failure signal is input to the monitor 53, the monitor 53 notifies the driver of information indicating that there is a high possibility that the sensor unit 20 has failed. When outputting the sensor failure signal to the monitor 53, the control unit CO ends the control flow.

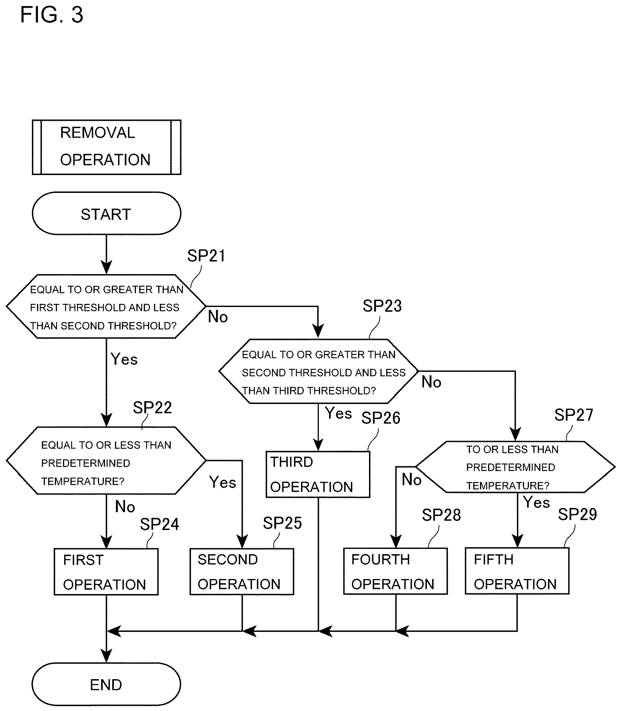

Next, the removal operation, described in step SP13, of controlling the heater 30 and the cleaner 40 to remove the deposits in the transmission region AR will be described. FIG. 3 is a control flowchart of the control unit CO in the removal operation. As illustrated in FIG. 3, the control flow includes steps SP21 to SP29.

### (Step SP21)

In this step, the control unit CO proceeds to step SP22 in the control flow when the intensity of the radio wave EW2 indicated by the detection signal from the sensor unit 20 is in a first range that is equal to or greater than the first threshold and less than a second threshold that is greater than the first threshold. In addition, the control unit CO proceeds to step SP23 in the control flow when the intensity of the radio wave EW2 is not within the first range. When dust or water droplets adhere to the transmission region AR, the intensity of the radio wave EW2 indicated by the detection signal can be included in the first range.

### (Step SP22)

In this step, the control unit CO proceeds to step SP24 in the control flow when the temperature indicated by the temperature signal from the temperature sensor 50 exceeds a predetermined temperature, and proceeds to step SP25 in the control flow when the temperature is equal to or lower than the predetermined temperature. The predetermined temperature is, for example, a temperature at which water or the like starts to freeze or a temperature close to such a temperature, and is set to 0 °C in the present embodiment.

### (Step SP24)

In this step, the control unit CO controls the heater 30 and the cleaner 40 such that an operation including a combination of the operation of the heater 30 and the operation of the cleaner 40 in a predetermined period is a first operation. The predetermined period may be constant, or may change according to the intensity of the radio wave EW2 indicated by the detection signal from the sensor unit 20. In the first operation, at least the cleaner 40 is driven in at least a part of the predetermined period. The first operation is an operation in which the heater 30 is not driven and the cleaner 40 injects gas from the gas unit 45 toward the transmission region AR for, for example, 3 seconds. Thus, the gas is injected from the injection nozzle 45c toward the transmission region AR, and dust is removed. The predetermined period in the first operation is the above-described 3 seconds, and the cleaner 40 is driven in the entire predetermined period.

In this step, the control unit CO may start to inject liquid after ending the injection of the gas, and end the injection of the gas after, for example, one second has elapsed from the start. Thus, since dust adhering to the outer cover 12 that has not been removed by the injection of the gas is removed by the injection of the liquid, the dust is more reliably removed. The liquid injection period may be shorter than the gas injection period, or be equal to or longer than the gas injection period. In this step, the cleaner 40 may inject only liquid without driving the heater 30. In this step, the heater 30 may be driven.

When the first operation ends, the control unit CO proceeds to step SP14 in the control flow.

### (Step SP25)

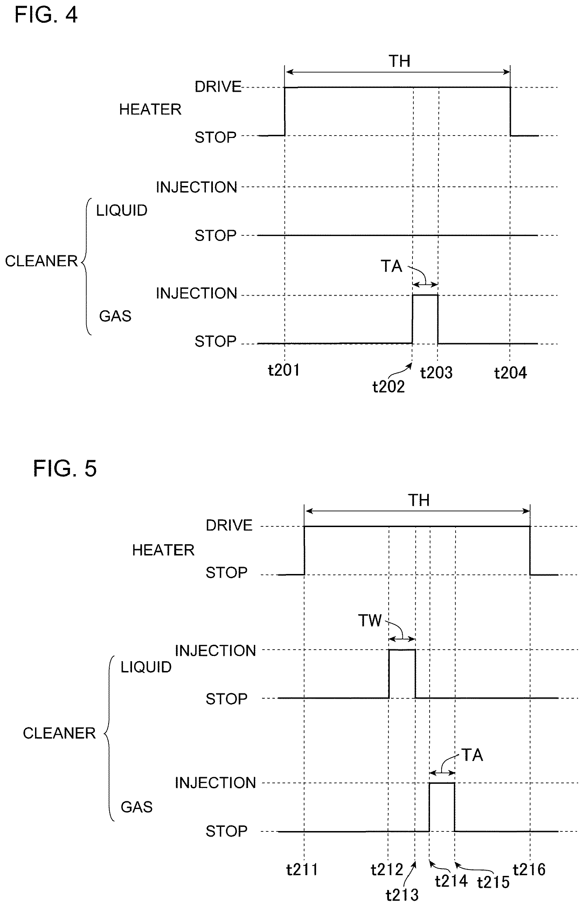

This step is a step in which the control unit CO controls the heater 30 and the cleaner 40 such that the operation including the combination of the operation of the heater 30 and the operation of the cleaner 40 in a predetermined period is a second operation. In the second operation, at least the cleaner 40 is driven in at least a part of the predetermined period. The second operation is an operation illustrated in FIG. 4, and the control unit CO controls the heater 30 and the cleaner 40 such that the operations thereof are as illustrated in FIG. 4. FIG. 4 is a timing chart schematically illustrating the second operation.

As illustrated in FIG. 4, the heater 30 starts to be driven at a time t201, starts to heat the outer cover 12, and stops being driven at a time t204. The cleaner 40 starts to inject gas at a time t202 that is later than the time t201 and earlier than the time t204, and ends the injection of the gas at a time t203 that is earlier than the time t204. The cleaner 40 does not inject liquid. In FIG. 4, the driving period of the heater 30 is indicated by a driving period TH, and the gas injection period of the cleaner 40 is indicated by an injection period TA.

In the second operation, the predetermined period is a period from the time t201 to the time t204, and the outer cover 12 is heated before the gas is injected toward the outer cover 12. When the temperature outside the vehicle VE is a temperature at which water or the like freezes, ice tends to adhere to dust. In this step, after the ice adhering to the dust adhering to the outer cover 12 is melted by the heating of the outer cover 12, the gas is injected. This is useful when ice adheres to dust adhering to the outer cover 12.

Alternatively, the heater 30 may stop being driven before the timing of starting the injection of the gas by the cleaner 40, and the cleaner 40 may inject liquid instead of the gas.

When the second operation ends, the control unit CO proceeds to step SP14 in the control flow.

### (Step SP23)

In this step, the control unit CO proceeds to step SP26 in the control flow when the intensity of the radio wave EW2 indicated by the detection signal from the sensor unit 20 is in a second range that is equal to or greater than the second threshold and less than a third threshold that is greater than the second threshold. In addition, the control unit CO proceeds to step SP27 in the control flow when the intensity of the radio wave EW2 is in a third range that is equal to or greater than the third threshold. In the present embodiment, the third threshold is set to a value that is higher than the intensity of the radio wave EW2 received by the sensor unit 20 when a predetermined amount of ice and snow adheres to the transmission region AR, and lower than the intensity of the radio wave EW2 received by the sensor unit 20 when a predetermined amount of mud adheres to the transmission region AR. Therefore, when ice and snow adhere to the transmission region AR, the intensity indicated by the detection signal from the sensor unit 20 can be included in the second range. In addition, when mud adheres to the transmission region AR, the intensity indicated by the detection signal from the sensor unit 20 can be included in the third range.

### (Step SP26)

In this step, the control unit CO controls the heater 30 and the cleaner 40 such that the operation including the combination of the operation of the heater 30 and the operation of the cleaner 40 in a predetermined period is a third operation. The predetermined period in the third operation may be constant, may change according to the intensity of the radio wave EW2 indicated by the detection signal from the sensor unit 20, and may be the same as or different from the predetermined period in the first operation. The third operation is different from the first operation in step SP24 in that at least the heater 30 is driven in at least a part of the predetermined period. The third operation of the present embodiment is an operation in which the cleaner 40 is not driven and the heater 30 is driven for, for example, 15 minutes. For this purpose, the control unit CO controls the power supply circuit 32 such that the current flows through the heating wire 31 for 15 minutes. As a result, the heating wire 31 generates heat, the outer cover 12 is heated, and ice and snow are removed. The predetermined period in the third operation is the above-described 15 seconds, and the heater 30 is driven in the entire predetermined period.

Note that the third operation may be an operation illustrated in FIG. 5, and the control unit CO may control the heater 30 and the cleaner 40 such that the operations thereof are as illustrated in FIG. 5. FIG. 5 is a timing chart schematically illustrating a modification of the third operation.

As illustrated in FIG. 5, the heater 30 starts to be driven at a time t211 and starts to heat the outer cover 12. The cleaner 40 starts to inject liquid at a time t212 that is later than the time t211, and ends the injection of the liquid at a time t213, for example, 3 seconds after the time t212. Thus, the cleaner 40 injects the liquid toward the transmission region AR for 3 seconds from the time t212. In FIG. 5, the liquid injection period of the cleaner 40 is indicated by an injection period TW. In addition, the cleaner 40 starts to inject gas at a time t214 that is later than the time t213, and ends the injection of the gas at a time t215, for example, 3 seconds after the time t214. Thus, the cleaner 40 injects the gas toward the transmission region AR for 3 seconds from the time t214. The heater 30 stops being driven at a time t216 that is later than the time t215. Thus, the heater 30 heats the outer cover 12 in a period from the time t211 to the time t216.

In the third operation, the predetermined period is a period from the time t211 to the time t216, and the time t212 that is the timing of starting the injection of the liquid by the cleaner 40 is later than the time t211 that is the timing of starting the driving of the heater 30. With such a configuration, the liquid is injected toward the ice and snow after the heating of the outer cover 12 causes water to be interposed at least partially between the ice and snow adhering to the outer cover 12 and the outer cover 12. The adhesion of ice and snow to the outer cover 12 when water is interposed at least partially between the ice and snow and the outer cover 12 tends to be smaller than that when water is not interposed between the ice and snow and the outer cover 12. Therefore, with such a configuration, ice and snow are easily removed as compared with a case where the outer cover 12 is not heated before the liquid is injected toward the outer cover 12.

When the third operation ends, the control unit CO proceeds to step SP14 in the control flow.

### (Step SP27)

In this step, as in step SP22, the control unit CO proceeds to step SP28 in the control flow when the temperature indicated by the temperature signal from the temperature sensor 50 exceeds the above-described predetermined temperature, and proceeds to step SP29 in the control flow when the temperature is equal to or lower than the predetermined temperature.

### (Step SP28)

In this step, the control unit CO controls the heater 30 and the cleaner 40 such that the operation including the combination of the operation of the heater 30 and the operation of the cleaner 40 in a predetermined period is a fourth operation. The predetermined period in the fourth operation may be constant, may change according to the intensity of the radio wave EW2 indicated by the detection signal from the sensor unit 20, and may be the same as or different from the predetermined period in the above-described other operations. The fourth operation is different from the third operation in step SP26 in that at least the cleaner 40 is driven in at least a part of the predetermined period. That is, the first operation and the fourth operation are different from the third operation. The fourth operation of the present embodiment is an operation in which the heater 30 is not driven and the cleaner 40 injects liquid from the liquid unit 41 toward the transmission region AR for, for example, 3 seconds. Thus, the control unit CO controls the pump 41b such that the pump 41b works for 3 seconds. Thus, the liquid is injected from the injection nozzle 41c toward the transmission region AR for 3 seconds, and mud is removed. The predetermined period in the fourth operation is the above-described 3 seconds, and the cleaner 40 is driven in the entire predetermined period.

When the fourth operation ends, the control unit CO proceeds to step SP14 in the control flow.

### (Step SP29)

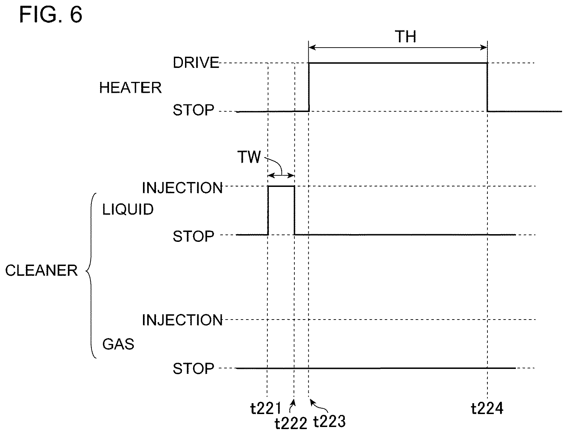

In this step, the control unit CO controls the heater 30 and the cleaner 40 such that the operation including the combination of the operation of the heater 30 and the operation of the cleaner 40 in a predetermined period is a fifth operation. In the fifth operation, at least the cleaner 40 is driven in at least a part of the predetermined period, and the fifth operation is different from the third operation in step SP26. The fifth operation of the present embodiment is an operation illustrated in FIG. 6, and the control unit CO controls the heater 30 and the cleaner 40 such that the operations thereof are as illustrated in FIG. 6. FIG. 6 is a timing chart schematically illustrating the fifth operation.

As illustrated in FIG. 6, the cleaner 40 starts to inject liquid at a time t221, and ends the injection of the liquid at a time t222, for example, 5 seconds after the time t221. The cleaner 40 does not inject gas. The heater 30 starts to be driven at a time t223 that is later than the time t222 and starts to heat the outer cover 12, and stop being driven at a time t224, for example, 15 minutes after the time t213.

In the fifth operation, the predetermined period is a period from the time t221 to the time t224, and there is a period in which the heater 30 is driven after the time t222, which is the timing of ending the injection of the liquid of the cleaner 40. Thus, the outer cover 12 is heated after the injection of the liquid onto the outer cover 12 ends. Therefore, with such a configuration, freezing of the liquid adhering to the outer cover 12 after the injection of the liquid onto the outer cover 12 ends, for example, the liquid from the cleaner 40 is suppressed, and the liquid is removed by vaporization.

In addition, in the fifth operation, the time t221 that is the timing of starting the injection of the liquid by the cleaner 40 is earlier than the time t223 that is the timing of starting the driving of the heater 30. Thus, the outer cover 12 is not heated before the liquid is injected toward the outer cover 12. When the outer cover 12 is heated and the moisture of dirt such as mud adhering to the outer cover 12 decreases, the adhesion force of dirt such as mud to the outer cover tends to increase. Therefore, with such a configuration, dirt such as mud is easily removed as compared with a case where liquid is injected toward the outer cover 12 after the outer cover 12 is heated.

Alternatively, the heater 30 may start to be driven in a period TW in which the cleaner 40 injects liquid.

The cleaner 40 that injects liquid may be driven during the period in which the heater 30 is driven. Thus, the outer cover 12 is heated before the liquid is injected onto the outer cover 12. When the temperature outside the vehicle VE is a temperature at which water or the like freezes, moisture in the mud adhering to the outer cover 12 tends to freeze. With such a configuration, the liquid can be injected after the moisture in the mud adhering to the outer cover 12 is melted by the heating of the outer cover 12. This is useful when the moisture in the mud adhering to the outer cover 12 freezes.

In addition, the cleaner 40 may start to inject gas between the time t222 and the time t223 and stop injecting the gas between the time t223 and the time t224. Therefore, the gas is injected toward the outer cover 12 after the injection of the liquid by the cleaner 40 ends. With such a configuration, the liquid adhering to the outer cover 12 after the injection of the liquid onto the outer cover 12 ends is removed by the gas from the cleaner 40.

When the fifth operation ends, the control unit CO proceeds to step SP14 in the control flow.

As described above, the control unit CO of the vehicle sensor device 1 of the present embodiment makes the determination of whether or not the object detected by the sensor unit 20 is included in the image signal from the camera 51 that is mounted on the vehicle VE and photographs the detection range of the sensor unit 20.

When the outer cover 12 has deposits, the sensor unit 20 tends to detect the deposits. In the above configuration, the control unit CO makes the determination of whether or not the object detected by the sensor unit 20 is included in the image signal. Since the camera 51 does not capture deposits, if the object detected by the sensor unit 20 is not included in the image signal, there is a high possibility that the deposits are on the outer cover, and thus the control unit CO can detect an abnormality of the vehicle VE such as the adherence of deposits to the outer cover 12 based on the above-described determination. As described above, the vehicle sensor device 1 can easily detect an abnormality of the vehicle VE as compared with the case of detecting the abnormality of the vehicle VE using only the intensity of the reflected waves of the electromagnetic waves from the deposits.

In addition, the control unit CO drives the heater 30 when the object detected by the sensor unit 20 is not included in the image signal.

When the heater 30 is driven, the outer cover 12 is warmed, and deposits such as water droplets, ice, and snow can be melted by heat and removed from the outer cover 12. When the deposits are removed, the position of the object can be detected from each of the sensor unit 20 and the camera 51, and the safety during traveling of a vehicle VE can be improved by using information on the position detected from each of the sensor unit and the camera. Alternatively, the control unit CO may not drive the heater 30 when the object detected by the sensor unit 20 is not included in the image signal.

In addition, the control unit CO drives the cleaner 40 when the object detected by the sensor unit 20 is not included in the image signal.

When the cleaner 40 is driven, deposits such as dust, water droplets, ice and snow, and mud can be removed from the outer cover 12 by injected liquid or gas. When the deposits are removed, the position of the object can be detected from each of the sensor unit 20 and the camera 51, and the safety during traveling of a vehicle VE can be improved by using information on the position detected from each of the sensor unit and the camera. Alternatively, the control unit CO may not drive the cleaner 40 when the object detected by the sensor unit 20 is not included in the image signal.

In addition, the control unit CO makes the above-described determination again after the end of driving of the heater 30 and the cleaner 40, and outputs the camera failure signal related to the failure of the camera 51 when it is determined in such a determination that the object detected by the sensor unit 20 is not included in the image signal.

After the deposits are removed, if the object is detected by the sensor unit 20 and the object detected by the sensor unit 20 is not included in the image signal, there is a high possibility that the camera 51 has failed. When there is a high possibility that the camera 51 has failed, for example, when the camera failure signal is input to a monitor 53 visible to a driver, the driver can be notified of information indicating that there is the high possibility that the camera 51 has failed through the monitor 53. The control unit CO may output the camera failure signal to the ECU 100. In addition, the control unit CO makes the above-described determination again after the end of driving of the heater 30 and the cleaner 40, and may not output the camera failure signal related to the failure of the camera 51 when it is determined in such a determination that the object detected by the sensor unit 20 is not included in the image signal.

In addition, the control unit CO makes the determination of whether or not the object included in the image signal is detected by the sensor unit 20 after the end of driving of the heater 30 and the cleaner 40, and outputs the sensor failure signal related to the failure of the sensor unit 20 when it is determined in such a determination that the object included in the image signal is not detected by the sensor unit 20.

After the deposits are removed, if the object is captured by the camera 51 and the object included in the image signal is not detected by the sensor unit 20, there is a high possibility that the sensor unit 20 has failed. When there is a high possibility that the sensor unit 20 has failed, for example, when the sensor failure signal is input to the monitor 53 visible to the driver, the driver can be notified of information indicating that there is the high possibility that the sensor unit 20 has failed through the monitor 53. The control unit CO may output the sensor failure signal to the ECU 100. In addition, the control unit CO makes the determination of whether or not the object included in the image signal is detected by the sensor unit 20 after the end of driving of the heater 30 and the cleaner 40, and may not output the sensor failure signal related to the failure of the sensor unit 20 when it is determined in such a determination that the object included in the image signal is not detected by the sensor unit 20.

As described above, the control unit CO calculates the position of the object with respect to the vehicle VE from the detection signal of the sensor unit 20 and the image signal of the camera 51. Therefore, in step SP11 of the control flow illustrated in FIG. 2, the control unit CO may make the above-described determination by comparing the position of the object detected by the sensor unit 20 with the position of the object included in the image signal. Alternatively, the control unit CO may not make the above-described determination by comparing the position of the object detected by the sensor unit 20 with the position of the object included in the image signal.

In addition, in step SP11, the control unit CO may make the above-described determination based on whether or not the object detected by the sensor unit 20 and reflecting electromagnetic waves as reflected waves with a predetermined intensity or higher is included in the image signal. When the predetermined intensity is an intensity of the radio wave EW2 received by the sensor unit 20 when a predetermined amount of mud adheres to the outer cover 12, the object detected by the sensor unit 20 is easily detected as an object located in front of the vehicle, not as deposits. Therefore, in the vehicle sensor device 1, the object can be easily detected by the sensor unit 20, and an abnormality of the vehicle VE such as the adherence of deposits to the outer cover 12 can be easily detected. Alternatively, in step SP11, the control unit CO may not make the above-described determination based on whether or not the object detected by the sensor unit 20 and reflecting electromagnetic waves as reflected waves with a predetermined intensity or higher is included in the image signal.

In addition, the control unit CO of the vehicle sensor device 1 of the present embodiment drives at least one of the heater 30 and the cleaner 40 when the object detected by the sensor unit 20 is not included in the image signal from the camera 51 that is mounted on the vehicle VE and photographs the detection range of the sensor unit 20.

As described above, when the object detected by the sensor unit 20 is not included in the image signal, there is a high possibility that deposits are on the outer cover. In this case, when the heater 30 is driven, the transmission region AR is warmed, and the deposits such as water droplets, ice, and snow can be melted by heat and removed from the outer cover 12. In addition, when the cleaner 40 is driven, the deposits such as dust, water droplets, ice and snow, and mud can be removed from the outer cover 12 by injected liquid or gas. When the deposits are removed, the position of the object can be detected from each of the sensor unit 20 and the camera 51, and the safety during traveling of a vehicle VE can be improved by using information on the position detected from each of the sensor unit and the camera.

Although the present invention has been described by taking the embodiment as an example, the present invention is not limited thereto.

In the control flow illustrated in FIG. 2, the control unit CO may perform the failure determination of the camera 51 in step SP14 after the failure determination of the sensor unit 20 in step SP16. In this case, the sensor unit 20 has not failed in step SP16, the control flow proceeds to step SP14. When the camera has not failed in step SP14, the control flow ends. In addition, in the control flow, at least one of step SP14 and step SP16 may be omitted. If step SP14 is omitted, step SP15 is also omitted, and if step SP16 is omitted, step SP17 is also omitted.

For example, by covering the transmission region AR of the outer cover 12 with a cover or the like, it is possible to realize an experiment in which the control unit CO determines whether or not the object detected by the sensor unit 20 is included in the image signal from the camera 51. Note that the experiment in which the control unit CO determines whether or not the object detected by the sensor unit 20 is included in the image signal from the camera 51 is not limited thereto. In addition, by covering the transmission region AR of the outer cover 12 with a cover or the like, it is possible to realize an experiment in which the control unit CO drives at least one of the heater 30 and the cleaner 40 when the object detected by the sensor unit 20 is not included in the image signal from the camera 51. Note that the experiment in which the control unit CO drives at least one of the heater 30 and the cleaner 40 when the object detected by the sensor unit 20 is not included in the image signal from the camera 51 is not limited thereto.

According to the present invention, the vehicle sensor device capable of easily detecting an abnormality of the vehicle is provided, and can be used in the field of automobiles and the like.

## Claims

1. A vehicle sensor device comprising:
an outer cover;
a sensor unit that is disposed deeper inside a vehicle than the outer cover, and detects an object using electromagnetic waves transmitted and received through the outer cover; and outputs a detection signal related to detection of the object; and
a control unit,
wherein the control unit makes a determination of whether or not the object detected by the sensor unit is included in an image signal from a camera that is mounted on the vehicle and photographs a detection range of the sensor unit.

2. The vehicle sensor device according to Claim 1, further comprising
a heater provided on the outer cover,
wherein the control unit drives the heater when the object detected by the sensor unit is not included in the image signal.

3. The vehicle sensor device according to Claim 1 or 2, further comprising
a cleaner that injects at least one of liquid and gas from an outside of the vehicle toward the outer cover,
wherein the control unit drives the cleaner when the object detected by the sensor unit is not included in the image signal.

4. The vehicle sensor device according to Claim 1, further comprising:
a heater provided on the outer cover; and
a cleaner that injects at least one of liquid and gas from an outside of the vehicle toward the outer cover,
wherein, when the object detected by the sensor unit is not included in an image signal from a camera that is mounted on the vehicle and photographs a detection range of the sensor unit, the control unit drives at least one of the heater and the cleaner, makes the determination again after the end of driving of the heater and the cleaner, and outputs a camera failure signal related to a failure of the camera
when it is determined in such a determination that the object detected by the sensor unit is not included in the image signal.

5. The vehicle sensor device according to Claim 1, further comprising:
a heater provided on the outer cover; and
a cleaner that injects at least one of liquid and gas from an outside of the vehicle toward the outer cover,
wherein, when the object detected by the sensor unit is not included in an image signal from a camera that is mounted on the vehicle and photographs a detection range of the sensor unit, the control unit drives at least one of the heater and the cleaner, makes a determination of whether or not the object included in the image signal is detected by the sensor unit after the end of driving of the heater and the cleaner, and outputs a sensor failure signal related to a failure of the sensor when it is determined in such a determination that the object included in the image signal is not detected by the sensor unit.

6. The vehicle sensor device according to Claim 1,
wherein the control unit makes the determination by comparing a position of the object detected by the sensor unit with a position of the object included in the image signal.

7. The vehicle sensor device according to Claim 1,
wherein the control unit makes the determination based on whether or not the image signal includes the object that is detected by the sensor unit and reflects the electromagnetic waves as reflected waves with predetermined intensity or higher.

8. A vehicle sensor device comprising:
an outer cover;
a sensor unit that is disposed deeper inside a vehicle than the outer cover, detects an object using electromagnetic waves transmitted and received through the outer cover, and outputs a detection signal related to detection of the object;
a heater provided on the outer cover;
a cleaner that injects at least one of liquid and gas from an outside of the vehicle toward the outer cover; and
a control unit,
wherein the control unit drives at least one of the heater and the cleaner when the object detected by the sensor unit is not included in the image signal from a camera that is mounted on the vehicle and photographs a detection range of the sensor unit.
